# EUROPEAN PATENT APPLICATION

(11) **EP 1 693 845 A1**
(43) Date of publication of application: **23.08.2006**
(21) Application number: 04771044.7
(22) Date of filing: 29.07.2004
(51) Int. Cl.: G11B 20/12, G11B 27/00

(54) **INFORMATION RECORDER, INFORMATION RECORDING METHOD AND RECORDING MEDIUM RECORDED WITH PROGRAM**

(30) Priority: 08.12.2003 JP 2003409389
(71) Applicant: Ricoh Company, Ltd., Tokyo 143-8555 (JP)
(72) Inventor: TAKAHASHI, Masaetsu, Yokohama-shi, Kanagawa 2240033 (JP)
(74) Representative: Mounteney, Simon James
(86) International application number: PCT/JP2004/010831
(87) International publication number: WO 2005/057581

(57) **Abstract**

PURPOSE To make it possible to record data such as user definable index information accompanying user data such as content data while keeping it possible to perform playback from an information recording medium also according to the conventional standard. CONFIGURATION The controller 19 records content data in the contents area of the user recordable area of the recording area of the optical disk 7, generates index information for referring to the contents of the content data, and records the index information in the Lead-Out area disposed outside the user recordable area of the optical disk.

## Description

### TECHNICAL FIELD

The present invention relates to information recorders such as CD drives, DVD drives, MO drives, MD drives, HD drives, FD drives, and memory card drives for recording time series data that are collections of data that change with the passage of time (for example, content data such as video data, still image data, and a sizable amount of text data [log]) on optical disks such as CD-R disks, CD-RW disks, CD-MRW disks, DVD-R disks, DVD-RW disks, DVD-RAM disks, DVD+R disks, and DVD+RW disks; magnetooptical disks such as MOs and MDs; magnetic disks such as HDs and FDs; and memory cards of nonvolatile RAMs, flash ROMs, etc., an information recording method for recording time series data on an information recording medium, and a recording medium on which is recorded a program for causing a computer to execute the process of the information recording method.

### BACKGROUND ART

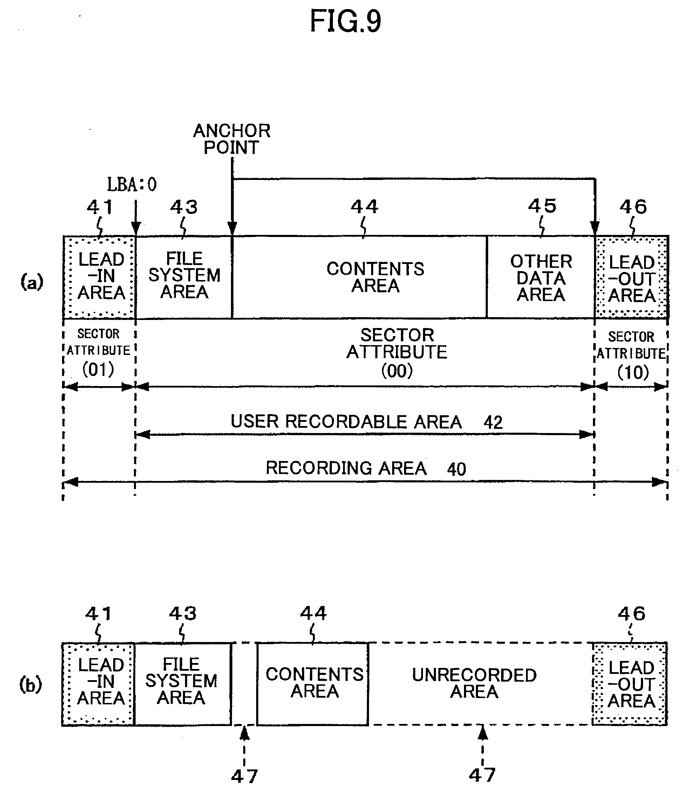

FIG. 9 is a diagram showing a layout of an information recording medium in which linear addressing is performed in data recording and playback.

Actually, this information recording medium is divided by a recording and playback area sector of a predetermined size, but FIG. 9 shows an area at application level greater in size than the recording and playback area sector.

As shown in (a) of FIG. 9, the head of a recording area 40 of this information recording medium is called a Lead-In area 41, in which are recorded information related to the information recording medium itself and the general information of the information recording medium, such as the layout information of subsequent recording units. This Lead-In area 41 is an area from which reading starts when it is mounted in an information recorder, an information playback apparatus, or an information recording and playback apparatus.

The Lead-In area 41 is followed by a user recordable area 42 in which a user can actually record user data such as content data. It is only in this user recordable area 42 that the user can record data.

The address of the first sector of the user recordable area 42 is zero, which is expressed as "LBA: 0" as indicated by the arrow in the drawing. Further, a specific address in the user recordable area 42 is a position statically determined for each file system such as an operating system (OS), and is called an anchor point.

This anchor point is a sector serving as a mark indicating that reading of the user data starts from here first. In some cases, there are multiple anchor points in the user recordable area 42. The case where the anchor point is provided at the starting position of each of a contents area 44 and a Lead-Out area 46 is shown in the drawing.

A file system area 43 in the user recordable area 42 is an area defining the recorded position, size, time, and attribute of each file and directory. After it, there is finally the contents area 44 to store content data.

The contents area 44 may be followed by another data area 45 to store data other than content data. Provision of the other data area 45 is discretionary, and the other data area 45 may be omitted.

Finally, there is a recorded area called Lead-Out area 46, which continues up to the vicinity of the end limit of the information recording medium. Based on this Lead-Out area 46, the information recorder prevents an optical pickup, which emits light for illumination for reading data from and writing data onto the information recording medium and receives reflected light, from jumping over the recording area 40.

Further, the sectors disposed in the Lead-In area 41, the user recordable area 42, and the Lead-Out area 46, respectively, are different in attribute, and the attributes are stored in the file system area 43. Taking a DVD as an example, the Lead-In area 41, the user recordable area 42, and the Lead-Out area 46 are distinguished by a sector attribute (01), a sector attribute (00), and a sector attribute (10), respectively.

The size of each area shown in FIG. 9 does not reflect the actual recording amount ratio. In an overwhelming number of cases, such an information recording medium as described above is occupied by content data. It is assumed that the areas of the information recording medium having the above-described functions are successive. If there are unrecorded areas 47 in the user recordable area 42 as shown in (b) of FIG. 9, the information recording medium cannot be played back in a common information playback-only apparatus, thus resulting in reduced compatibility.

The above-described content data include image data, voice data, map data, and encyclopedia data, which have been regarded as large-capacity data. Index information (index data) for referring to locations in the content data is often created. For example, in the case of image data, the index data include chapter image data recorded together with video content data such as a motion picture.

Chapter image data are selected and created by a maker or automatically generated in an information recording and playback apparatus, and are recorded in an information recording medium such as CD (Compact Disc) or DVD (Digital Versatile Disc) as part of video content data recorded therein.

The chapter image data of multiple parts corresponding to the important scenes of a motion picture are selected by a maker as chapter image data as described above. A user selects one of chapter image data items prerecorded in the information recording medium, thereby referring to an image based on the one of the chapter image data items, and plays back video content data from the scene of the image. In such a manner, a user can utilize chapter image data as index information.

However, it hardly provides index information effective for many users different in tastes and likes for a maker to include only the scenes selected by the maker as described above, that is, the chapter image data corresponding to part of video content data, as index information.

Further, there is proposed a playback technique to make it possible to have an overview of the entire video content data in a short period of time by continuously playing back only chapter image data serving as index information in the case where the chapter image data serve as index information (see, for example, Japanese Laid-Open Patent Application No. 2001-76474). According to this technique, only the chapter image data of portions (time, etc.) specified by a user are played back. This allows the user to have an overview of the contents of the entire video content data in a short period of time.

According to the above-described technique, the user specifies the portions of content data that the user wishes to play back. Accordingly, each user can know the index information (chapter image data in the above-described technique) of a desired portion of the content data. However, the user is required to specify which portion of the content data is to be played back. Therefore, without knowledge of the contents of the content data, the specification cannot be performed effectively, so that the function of providing index information for informing a user of a digest of the contents of the content data cannot be achieved.

That is, each user may wish to obtain a different part (portion) of content data as index information regarding the content data. The above-described technique to utilize chapter image data and the like cannot provide index information responsive to such various requests.

Further, the above-described technique is an information playback apparatus capable of setting multiple time conditions, does not consider creation and recording of discretionary index information by a user when the user records any content data in a recording medium by her/himself, and is effective only for a recording medium in which content data and their index information are authored together in advance.

### DISCLOSURE OF THE INVENTION

### PROBLEMS TO BE SOLVED BY THE INVENTION

However, according to the conventional technique, it has been difficult to record data that is not defined in a predetermined standard as data accompanying user data to be recorded in an information recording medium.

For example, the conventional recorders and playback apparatuses assume succession of areas for storing content data as seen in DVD video disks and video CDs. Therefore, there is no problem as long as recording and playback are performed within their respective standards. However, in the case of enabling index data according to the idea of a user to be recorded, it has been difficult to add new index information defined by the user thereto while maintaining compatibility.

The present invention has been made in view of the above-described points, and has an object of enabling data such as user definable index information accompanying user data such as content data to be recorded in an information recording medium while keeping it possible to perform playback from the information recording medium also according to the conventional standard.

### MEANS FOR SOLVING THE PROBLEMS

In order to achieve the above-described object, the present invention provides the following information recorders (1) through (5). (1) An information recorder having recording means for recording data accompanying user data in an area disposed outside a user data area to record the user data of the recording area of an information recording medium. (2) The information recorder as described above in (1), wherein the recording means includes means for recording the same attribute as the attribute of the user data area as the attribute of the area disposed outside the user data area. (3) An information recorder having content data recording means for recording content data in an information recording medium; index information generating means for generating, for the content data, index information for referring to the contents of the content data; and index information recording means for recording the index information generated by the index information generating means in an area disposed outside a user data area to record user data of the recording area of the information recording medium. (4) The information recorder as described above in (3), wherein the index information recording means records the index information generated by the index information generating means in the area disposed outside the user data area to record the user data of the recording area of the information recording medium at a time after the content data recording means completes the recording of the content data in the information recording medium. (5) The information recorder as described above in (3), wherein the index information recording means successively records the index information generated by the index information generating means in the area disposed outside the user data area to record the user data of the recording area of the information recording medium during the recording of the content data in the information recording medium by the content data recording means.

Further, the following information recording methods (6) through (10) are also provided. (6) An information recording method recording data accompanying user data in an area disposed outside a user data area to record the user data of the recording area of an information recording medium. (7) The information recording method as described above in (6) recording the same attribute as the attribute of the user data area as the attribute of the area disposed outside the user data area. (8) An information recording method having a content data recording step of recording content data in an information recording medium; an index information generating step of generating, for the content data, index information for referring to the contents of the content data; and an index information recording step of recording the index information generated by the index information generating step in an area disposed outside a user data area to record user data of the recording area of the information recording medium. (9) The information recording method as described above in (8), wherein the index information recording step records the index information generated by the index information generating step in the area disposed outside the user data area to record the user data of the recording area of the information recording medium at a time after the content data recording step completes the recording of the content data in the information recording medium. (10) The information recording method as described above in (8), wherein the index information recording step successively records the index information generated by the index information generating step in the area disposed outside the user data area to record the user data of the recording area of the information recording medium during the recording of the content data in the information recording medium by the content data recording step.

Further, recording media having the following programs (11) through (15) recorded therein are also provided. (11) A recording medium in which is recorded a program for causing a computer to execute a process of recording data accompanying user data in an area disposed outside a user data area to record the user data of a recording area of an information recording medium. (12) The recording medium in which is recorded the program as described above in (11) for causing the computer to execute a process of recording the same attribute as the attribute of the user data area as the attribute of the area disposed outside the user data area. (13) A recording medium in which is recorded a program for causing a computer to execute a content data recording process of recording content data in an information recording medium; an index information generating process of generating, for the content data, index information for referring to the contents of the content data; and an index information recording process of recording the index information generated by the index information generating process in an area disposed outside a user data area to record user data of the recording area of the information recording medium. (14) The recording medium in which is recorded the program as described above in (13), wherein the index information recording process records the index information generated by the index information generating process in the area disposed outside the user data area to record the user data of the recording area of the information recording medium at a time after the content data recording process completes the recording of the content data in the information recording medium. (15) The recording medium in which is recorded the program as described above in (13), wherein the index information recording process successively records the index information generated by the index information generating process in the area disposed outside the user data area to record the user data of the recording area of the information recording medium during the recording of the content data in the information recording medium by the content data recording process.

### EFFECTS OF THE INVENTION

According to the present invention, it is possible to provide an information recorder, an information recording method, and a recording medium in which is recorded a program that can record data such as user definable index information accompanying user data such as content data in an information recording medium while keeping it possible to perform playback from the information recording medium also according to the conventional standard.

### BRIEF DESCRIPTION OF THE DRAWINGS

FIG. 1 is a block diagram showing a configuration of an optical disk recorder (optical disk drive) that is one mode of implementation of the present invention;
FIG. 2 is a block diagram showing a configuration of a computer system including the optical disk recorder that is one mode of implementation of the present invention;
FIG. 3 is a diagram showing a DVD disk format;
FIG. 4 is a diagram showing the format of a case where an index area is provided in a Lead-Out area following the contents area of an optical disk;
FIG. 5 is a schematic diagram showing configurations of an index information group;
FIG. 6 is a flowchart showing the operation of recording index information at a time after completion of recording of content data in the controller of this optical disk drive or the CPU of a host computer;
FIG. 7 is a flowchart showing the operation of successively recording index information during recording of content data in the controller of this optical disk drive or the CPU of the host computer;
FIG. 8 is a flowchart showing the operation of moving index information in the controller of the optical disk drive or the CPU of the host computer; and
FIG. 9 is a diagram showing a layout of an information recording medium in which linear addressing is performed in data recording and playback.

### DESCRIPTION OF THE REFERENCE NUMERALS

1, 4: Optical disk recorder 2, 5: Input device 3, 6: Display unit 7: Optical disk 8: Editing and recording apparatus 10: Spindle motor 11: Optical pickup 12: Coarse movement motor 13: Rotation control system part 14: Coarse movement motor control system part 15: Optical pickup control system part 16: Signal processing system part 17: Nonvolatile memory 18: Buffer memory 19: Controller 20: External interface 21: Host computer 22: A/D conversion part 23: D/A conversion part 24: ATA/ATAPI interface 25: Encoder/decoder 26: ROM 27: RAM 28: RTC timer 29: CPU 30: Memory card slot 31: Memory card 32: Memory card controller 40: Recording area 41: Lead-In area 42: User recordable area 43: File system area 44: Contents area 45: Other data area 46: Lead-Out area 47: Unrecorded area 49: Temporary Lead-Out area 50: Index information

### BEST MODE FOR CARRYING OUT THE INVENTION

A specific description is given below, based on the drawings, of the best mode for carrying out this invention.

### [First Embodiment]

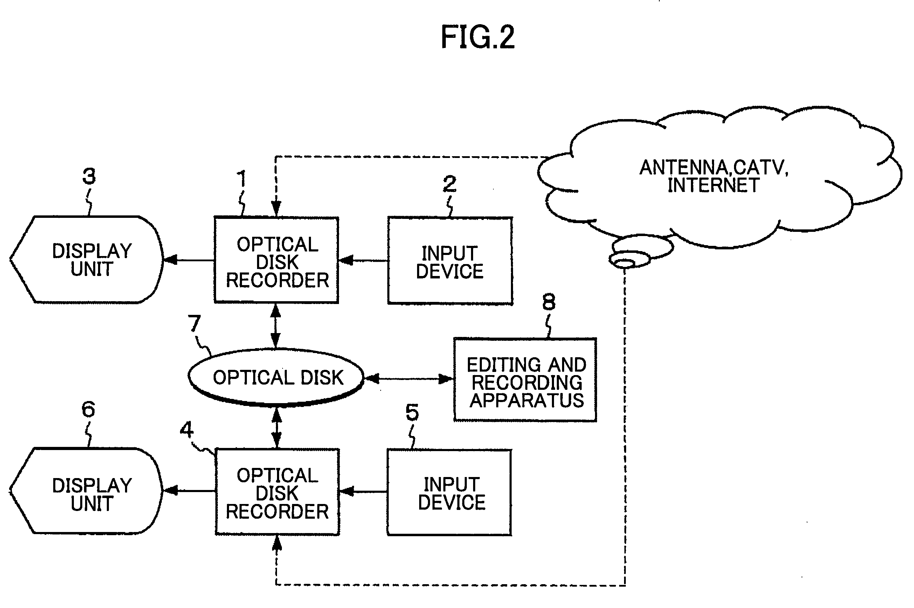

FIG. 2 is a block diagram showing a configuration of a computer system including an optical disk recorder that is one mode of implementation of the present invention.

An upper-side optical disk recorder 1 can receive image and voice data from other media such as an antenna, a CATV, and the Internet through a tuner and a network interface, and records them on an optical disk 7. Further, with emphasis being put on usability and easiness in use, it includes an input device 2 such as a remote controller. A display unit 3 such as a CRT or LCD, which is not essential, provides convenience in inputting.

On the other hand, a lower-side optical disk recorder 4 is housed in a computer or personal computer (PC) serving as a host computer. The PC enables an instruction to be input through an input device 5 such as a keyboard or mouse. Further, there is also a display unit 6 such as a CRT or LCD. More detailed editing and search operations are expected in the lower-side optical disk recorder 4. The remote controller and the keyboard/mouse can also serve as means for inputting and means for selecting index data. Then, image and voice data can be received from other media such as an antenna, a CATV, and the Internet through a tuner and a network interface and be recorded on the optical disk 7. Further, the image and voice data can be edited and recorded on the optical disk 7.

Each of the optical disk recorders 1 and 4 has its entire apparatus connected to a host computer through an interface such as ATAPI. An editing and recording apparatus 8 is a dedicated apparatus used in a studio. It enables fine authoring, and is often designed for professional use. According to the optical disk unit of this mode of implementation, recorders for various places and purposes can be provided.

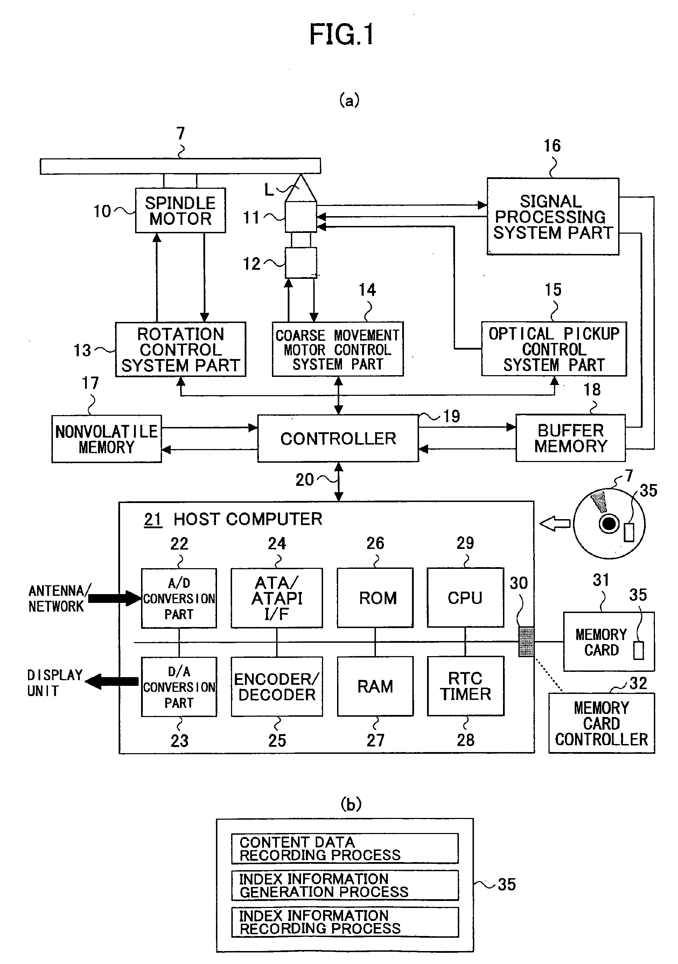

FIG. 1(a) is a block diagram showing a configuration of an optical disk recorder (optical disk drive) that is one mode of implementation of the present invention.

This optical disk drive, which corresponds to the above-described optical disk recorders 1 and 4, is a recorder such as a DVD+RW drive for recording data on the optical disk (recording medium) 7, which data can be recorded on and played back from, such as a DVD+RW disk. The optical disk drive includes a spindle motor 10 to rotate the optical disk 7, a rotation control system part 13 to control the rotation of the spindle motor 10, an optical pickup 11 to emit laser light L for recording data on and playing back data from the optical disk 7, an optical pickup control system part 15 to control the driving of emission of the laser light L by the optical pickup 11, a coarse movement motor 12 to move the optical pickup 11 in the radial directions of the optical disk 7, a coarse movement motor control system part 14 to control the rotating of the coarse movement motor 12, and a signal processing system part 16 to control the output of a played-back signal from and the input of a recording signal to the optical pickup 11.

Further, a controller 19 included in the optical disk drive is realized by a microcomputer of a CPU, a register, a RAM, etc. Various programs including a program according to the present invention are stored (along with various settings) in a nonvolatile memory 17 such as a ROM. By the CPU executing the process of the program, an information recording method according to the present invention is executed, and the function of each means according to the present invention is realized.

Further, the optical disk drive includes a buffer memory (cache memory) 18 used as an area for temporarily storing data such as data to be recorded on the optical disk 7 and data played back from the optical disk 7 and for temporarily storing data when the controller 19 performs various operations; and an external interface 20 for exchanging data with an externally connected host computer 21.

According to this optical disk drive, data read from the optical disk 7 are stored in the buffer memory 18 and are transferred to the host computer 21. Further, data transmitted from the host computer are converted in accordance with the type of the optical disk 7 and are recorded through the buffer memory 18. Further, the controller 19 performs control operations such as starting, stopping, and restarting of recording and loading and unloading of an optical disk. The communications with the host computer 21 are performed through the external interface 20. The communications are performed by the host computer 21 issuing a command and the optical disk drive responding to it. In the case where a digital controller is integrated with the host computer 21, the connection is made through an analog interface.

On the other hand, on the host computer 21 side, AD conversion of an external image signal (corresponding to inputting from an antenna or a network such as the Internet) by an A/D conversion part 22, compression and decompression by an encoder/decoder 25 (alternatively performable at high speed by a CPU), DA conversion by a PAL/NTSC video encoder (corresponding to outputting to a display unit such as a TV, CRT, or LCD) in a D/A conversion part 23 are performed.

Further, by measuring a recording time and clarifying a real time by adding an RTC (Real Time Clock) timer 28, it is possible to make them a trigger for generation of data accompanying user data, such as index information, and the contents of data accompanying user data, such as index information.

Further, an ATA/ATAPI interface (I/F) 24 is provided so as to perform communications with the optical disk drive and a hard disk drive (HDD) whose graphical representation is omitted.

Further, the host computer 21 includes a CPU 29, a ROM 26, and a RAM 27. The RAM 27 is used as a working memory and a buffer for image and voice data. The ROM 26 stores a program controlling the entire host computer and an operating system (OS). The ROM 26 may be a mask ROM, but if a flash ROM, which is nonvolatile and allows rewriting in mass, it is possible to save effort at the time of upgrading.

Further, the host computer 21 includes a memory card controller 32 and a memory card slot 30. By inserting a memory card 31 into the memory card slot 30, it is possible to input a digital camera image from the memory card 31 and record data accompanying user data (such as the index information of content data) in the memory card 31. The memory card 31 is often formed of a removable flash ROM, and can be used for exchanging digital data with not only a PC but also various devices.

A function according to the present invention can be realized by the CPU 29 of the host computer 21 instead of the controller 19 of the optical disk drive.

In this case, various programs including a program according to the present invention are stored (along with various settings) in the ROM 26. By the CPU 29 executing the process of the program and thereby controlling the controller 19, an information recording method according to the present invention is executed, and the function of each means according to the present invention is realized.

A program 35 (and various settings) according to the present invention stored in the ROM 26 is stored in a recording medium such as the memory card 31 or the optical disk 7, and is installed in the ROM 26 from the recording medium. Since the optical disk 7 and the memory card 31 are replaceable, the program according to the present invention can be installed in advance, by the information recorder, from the optical disk 7 or the memory card 31 in which the program is recorded.

As shown in (b) of FIG. 1, the program causing a computer to execute a content data recording process, an index information generation process, and an index recording process is recorded on the optical disk 7 or the memory card 31.

This computer system performs processing through the control of the controller 19 in the case of realizing a function according to the present invention on the optical disk drive side or through the control of the controller 19 and the CPU 29 in the case of realizing a function according to the present invention also with the host computer 21. For example, when recording of image data, which is an example of the user data such as content data, is started, a write command including data such as the created image data and predetermined chapter image data is processed from the host computer 21 side. Further, apart from it, the CPU 29 or the controller 19 creates data accompanying the user data, such as the index information of each frame or each time of recording (for example, each time generated based on Greenwich Mean Time and the elapsed time from the start of recording) of the image data, and records the data on the optical disk 7 at an appropriate time during recording of the image data or after recording of the image data.

Next, a description is given of a format at the time of recording user data and their accompanying data on the optical disk 7 in this optical disk drive.

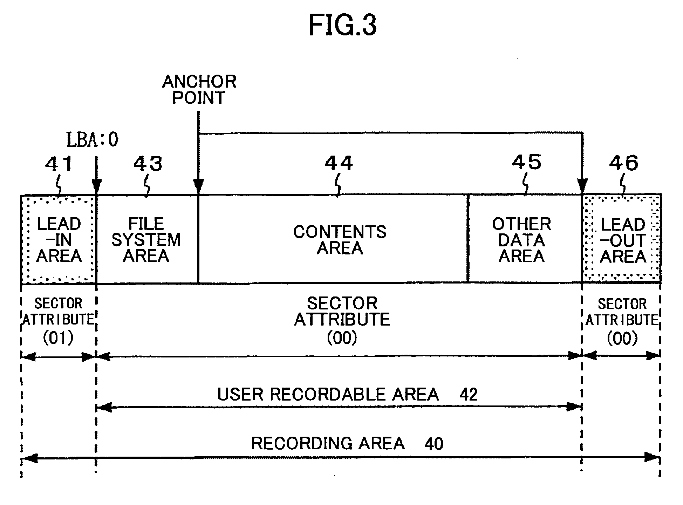

FIG. 3 is a diagram showing a DVD disk format.

If the optical disk 7 is a DVD disk, as shown in the drawing, the head of the recording area 40 is the Lead-In area 41, in which is recorded information related to the DVD disk itself and the general information of the optical disk, such as the layout information of subsequent recording units. It is followed by the user recordable area 42 in which a user can perform recording, where the address of the first sector is zero "LBA:0." The file system area 43, an area defining the recorded position, size, time, and attribute of each file and directory, is at the head of the user recordable area 42, and the above-described anchor point is set therein.

Then, the contents area 44 to store the main body of content data and the other data area 45 to store data other than the content data follow. It is optional to provide the other data area 45, which may be omitted.

There is the Lead-Out area 46 at the end, and data accompanying the content data that are user data (for example, index information) are recorded and stored in this Lead-Out area 46.

That is, the Lead-Out area 46 corresponds to the area disposed outside the user recordable area 42, which is the user data area of the recording area of the optical disk.

Further, in order to record the same attribute as the attribute of the user recordable area 42 for the Lead-Out area 46, the attribute of a sector in the Lead-Out area 46 is recorded in the file system area 43 as (00), which is the same as the sector attribute of the user recordable area 42.

In this manner, it is possible to use the Lead-Out area 46 disposed outside the user recordable area 42 of the optical disk 7 as a place to store data accompanying user data. Further, by recording the same attribute as the attribute of the user recordable area 42 for the Lead-Out area 46, it is possible for even a DVD playback unit that does not recognize the presence of data in the conventional Lead-Out area to read information recorded in this Lead-Out area 46.

Next, a description is given of a format at the time of recording content data and their index information on the optical disk 7 in this optical disk drive.

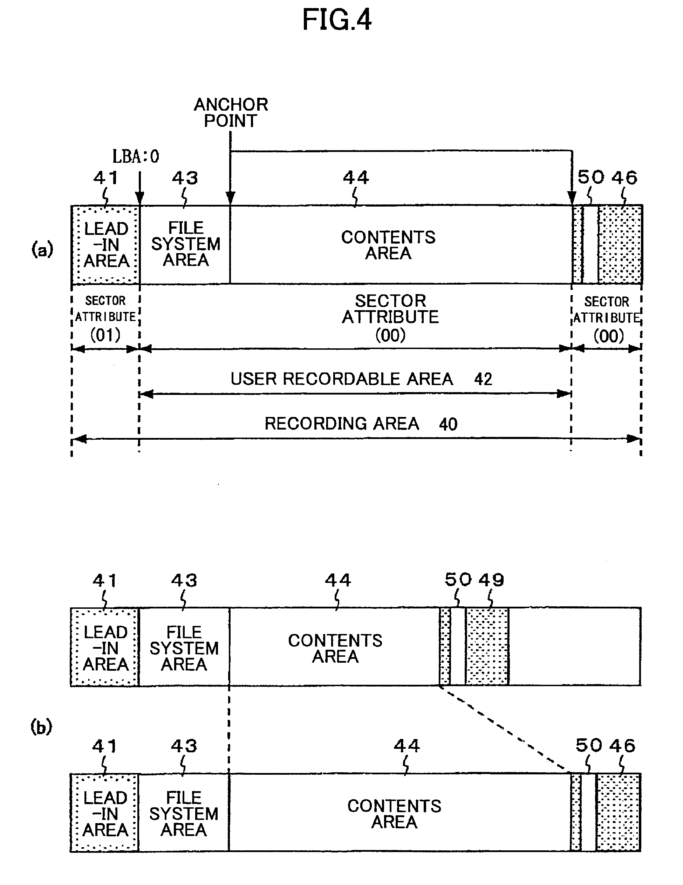

FIG. 4 is a diagram showing the format of a case where an index area is provided in the Lead-Out area after the contents area of the optical disk 7.

As shown in FIG. 4(a), the file system area 43 is at the head of the user recordable area 42, and is followed by the contents area 44 to store the main body of content data. An anchor point is set at the starting position thereof. Further, with respect to the content data, multiple pieces of index information 50 for referring to the contents of the content data are recorded and stored in the Lead-Out area 46 disposed outside the user recordable area 42.

That is, this Lead-Out area 46 corresponds to an area disposed outside the user recordable area 42, which is the user data area of the recording area of the optical disk.

Further, in the file system area 43, the attribute of the Lead-Out area 46 is recorded as the same as the attribute of the user recordable area 42. Therefore, the attribute of a sector in the Lead-Out area 46 is recorded as (00), which is the same sector attribute as that of the user recordable area 42.

Further, if the optical disk 7 is a DVD+RW disk or a CD-MRW disk, when additional writing of content data takes place, it is necessary, as shown in (b) of FIG. 4, to move or overwrite a temporary Lead-Out area 49 including the index information 50 before the additional writing. For example, if temporary data is completed by the additional writing, the Lead-Out area 46 including the index information 50 is recorded. Therefore, additional writing is limited to rewritable information recording media.

Further, the attribute of the Lead-Out area 46 is recorded as the same as the attribute of the user recordable area 42 in the file system area 43 in view of reading out the index information recorded in the Lead-Out area in a common DVD playback unit. Therefore, by recording the attribute of a sector in the Lead-Out area 46 as (00), which is the same sector attribute as that of the user recordable area 42, it is possible to increase playback compatibility.

Thus, by preparing index information related to content data separately from the content data, it is possible to store and use summaries according to various searches not included in the contents and conventional standards and users.

Next, a description is given of the index information and index information group of the content data.

The index information group refers to a group of index information items for multiple parts of the content data in time series.

The index information group is the index information items corresponding to respective parts into which the content data are divided according to, for example, regular time intervals (or time intervals different from the regular time intervals), which index information items are arranged and stored in the order of progress of the content data.

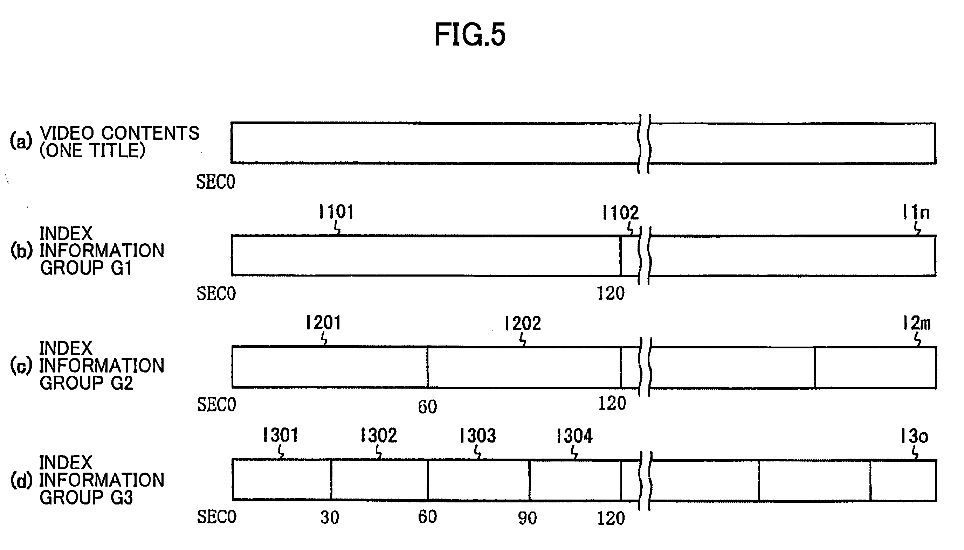

FIG. 5 is a diagram showing configurations of the index information group. The index information is data for referring to multiple parts of the content data. For example, in the case of video content data for playing back video such as a motion picture or a TV program, the index information can be expressed in MPEG-7 (Moving Pictures Expert Group 7) format, and can be recorded in various information recording media such as a DVD (Digital Versatile Disc) and an HD (Hard Disk).

The index information group is the index information items of multiple parts for video content data (for one motion picture or one program), which are one content data item shown in (a) of FIG. 5, arranged and stored in the order of time series in which video progresses. It is preferable to employ each frame or the data of each time of recording of the video content data as the index information.

Each index information shown schematically as a block in FIG. 5 is not its amount of data expressed in length but a schematic expression of the contents portion to which the index information corresponds.

For example, an index information group G1 shown in (b) of FIG. 5 has index information items I101, I102 ... corresponding to the 120-second portions into which the video content data are divided. That is, these index information items I101 and I102 are index information corresponding to the image of a section of 0-120 seconds and the image of a section of 120-240 seconds, which images are 120-second divided portions of the video content data.

An index information group G2 shown in (c) of FIG. 5 has index information items I201, I202, I203 ... corresponding to 60-second portions into which the video content data are divided. That is, these index information items I201, I202, and I203 are index information corresponding to the image of a section of 0-60 seconds, the image of a section of 60-120 seconds, and the image of a section of 120-180 seconds, which images are 60-second divided portions of the video content data.

Further, an index information group G3 shown in (d) of FIG. 5 has index information items I301, I302, I303 ... corresponding to 30-second portions into which the video content data are divided.

If the time of contents is divisible by a division time interval, each portion has the same time. However, if the time is not divisible, only the last portion is different in time from the other portions as graphically represented, and the last portion corresponds to a time shorter than the division time interval. The index information (I1n, I2m, and I3o) is also prepared for such a portion the same as for the other portions.

Each of the index information items I101, I102 ..., I201, I202..., I301, I302... shown in FIG. 5 includes information for identifying the image portion to which it corresponds and the image data of at least one frame included in the corresponding image. The information for identifying an image portion indicates time in the entire content data of the image portion to which the index information item corresponds, in which a start time and an end time are included.

For example, the index information item I101 includes time information such as START TIME "0" and END TIME "120," the index information item I202 includes time information such as START TIME "60" and END TIME "120," and the index information item I302 includes time information such as START TIME "30" and END TIME "60."

Further, the image data to be included in the index information item may be, for example, the first frame or the middle frame (a frame to be played back at a time point of 60 seconds in the section of 0-120 seconds) in the corresponding image section. The image data may be any frame image data in the section.

If the image data of at least one frame are included in each index information item of the index information group, by reading out the image data from the index information items included in the index information group at predetermined time intervals at the time of playback, the images at the division time intervals of the index information group, for example, in the case of the index information group G2, the images at intervals of 60 seconds, are successively displayed, being switched from one to another at each predetermined time.

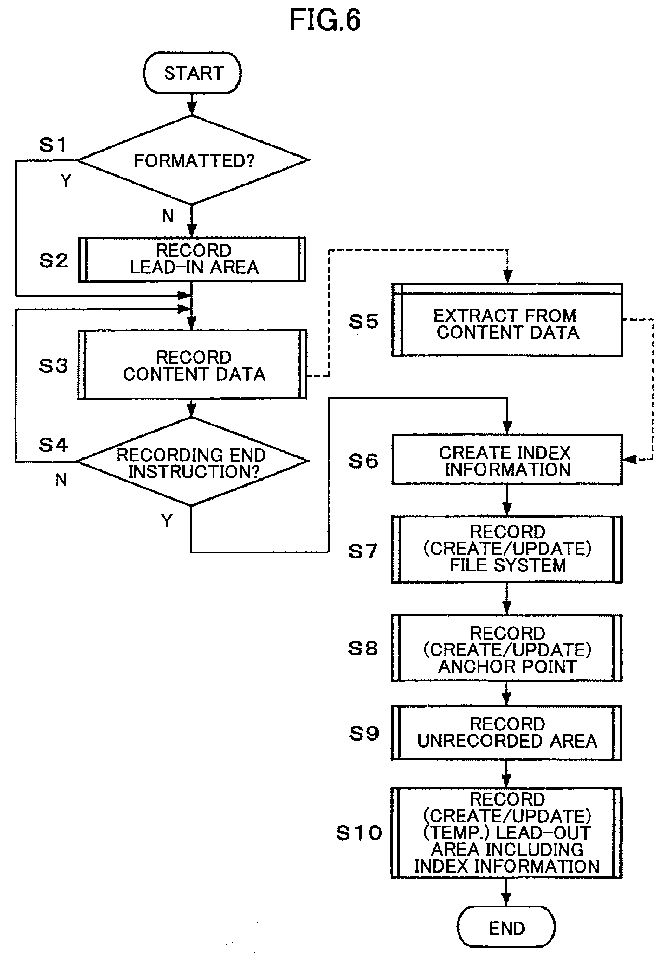

FIG. 6 is a flowchart showing the operation of recording index information at a time after completion of recording of content data in the controller of this optical disk drive or the CPU of the host computer.

At the time of starting to record content data or at the time of insertion of an optical disk, in step (indicated by "S" in the drawing) 1, the controller (or the CPU 29) determines whether the optical disk is formatted. If the optical disk is formatted, it proceeds to step 3. If the optical disk is not formatted, in step 2, it performs formatting by recording the Lead-In area of the recording area of the optical disk (not necessary in a write-once optical disk), and it proceeds to step 3. In step 3, it records content data in the contents area of the optical disk. Here, simultaneously, in step 5, the controller 19 (or the CPU 29) extracts data that can be used as index information from the content data recorded in the operation of step 3, and stores the extracted data, which may be stored in a RAM, a recording area that is not affected, or another information recording medium.

In step 4, the controller 19 (or the CPU 29) determines whether there has been a recording end instruction such as a STOP button. If there has been no recording end instruction, it returns to step 3. If there has been a recording end instruction, it proceeds to step 6 and goes on to the operation of creating index information. If possible, it performs processing based on an operation from a user, and thereafter, it creates, from the extracted content data, an index information group, which is a collection of the index information items of multiple parts for the content data which index information items are arranged in the order of time series of the content data. In step 7, it records (creates or updates) a file system so that other devices can recognize the content data and the index information, and records the same attribute as that of the user recordable area as the attribute of the Lead-Out area (or a temporary Lead-Out area).

In step 8, the controller 19 (or the CPU 29) records (creates or updates) an anchor point, and finally, in step 9, if there is an unrecorded part left in the area from LBA:0 to the largest address at which recording has been performed, it performs recording therein so as to make the area continuous. Then, in step 10, it records (creates or updates) a Lead-Out area including each index information item (each index data item) of the created index information group (a temporary Lead-Out area [TLO area] including the index information in the case of the optical disk being a DVD+RW disk or a CD-MRW disk), and ends this operation.

Thus, after recording of the content data in the optical disk 7 is completed, the generated index information is recorded at a time in the Lead-Out area 46 disposed outside the user recordable area 42 of the optical disk 7.

Recording the index information at a time at the end after completion of recording the content data in this manner causes time to be required in subsequent processing after recording of the content data. However, since creation of the index information is started after all the content data are recorded, it is possible to create index information that covers the entire content data, so that a user can arbitrarily select a portion to become index information.

An advantage of the above-described operation is that there is room for a user to perform processing because the index information can be recorded all at once at the end. Accordingly, it is easy to create index information that is meaningful to the user.

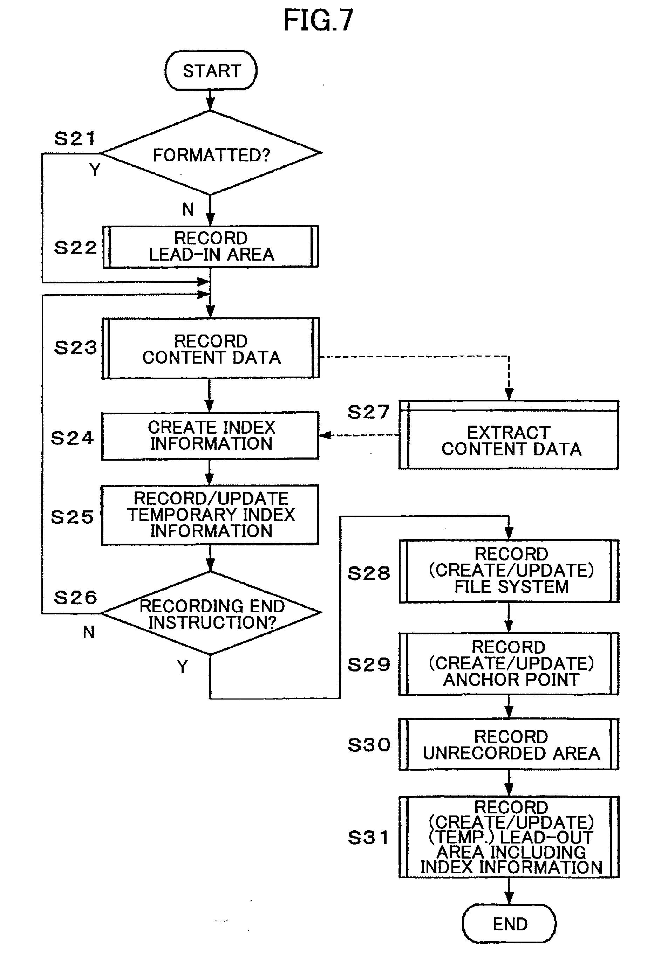

FIG. 7 is a flowchart showing the operation of successively recording index information during recording of content data in the controller of this optical disk drive or the CPU of the host computer.

At the time of starting to record content data or at the time of insertion of an optical disk, in step (indicated by "S" in the drawing) 21, the controller (or the CPU 29) determines whether the optical disk is formatted. If the optical disk is formatted, it proceeds to step 23. If the optical disk is not formatted, in step 22, it performs formatting by recording the Lead-In area of the recording area of the optical disk (not necessary in a write-once optical disk), and it proceeds to step 23. In step 23, it records content data in the contents area of the optical disk. Here, in parallel with the start of recording of the content data, in step 27, the controller 19 (or the CPU 29) extracts data that can be used as index information from the content data, and separately stores the extracted data, which may be stored in a RAM, a recording area that is not affected, or another information recording medium.

It proceeds to step 24 and goes on to the operation of creating index information. If possible, the controller 19 (or the CPU 29) performs processing based on an operation from a user, and thereafter, it successively creates, from the extracted content data, the index information items of multiple parts for the content data. In step 25, when a certain number of index information items are stored, it records them in a temporary Lead-Out area or a Lead-Out area as temporary index information.

In step 26, the controller 19 (or the CPU 29) determines whether there has been a recording end instruction such as a STOP button. If there has been no recording end instruction, it returns to step 23. If there has been a recording end instruction, in step 28, it records (creates or updates) a file system so that other devices can recognize the content data and the index information, and records the same attribute as that of the user recordable area as the attribute of the temporary Lead-Out area or Lead-Out area. In step 29, it records (creates or updates) an anchor point, and finally, in step 30, if there is an unrecorded part left in the area from LBA:0 to the largest address at which recording has been performed, it performs recording therein so as to make the area continuous. Then, in step 31, it records (creates or updates) a Lead-Out area storing an index information group including the temporary index information to the final index information (a temporary Lead-Out area [TLO area] including the index information in the case of the optical disk being a DVD+RW disk or a CD-MRW disk), and ends this operation.

An advantage of this operation is that recording of the index information can be completed immediately after an end instruction. There is the advantage that the time from the instruction to the actual removal of the optical disk can be shortened. Therefore, this is suitable for recording period- or time-dependent index information. A quick reference and a digest may be considered as examples of this index information.

By thus recording index information in parallel with the recording of content data, it is possible to perform processing substantially automatically although a user is prevented from determining a desired portion as index information because the index information is recorded during recording of the content data.

For example, it is possible to provide a user with functions such as indexing at regular time intervals, indexing at fixed times, indexing to separate a CM and a main part using a voice signal as a trigger, creating indexes for more fast-forwarding and rewinding than prescribed, and digesting.

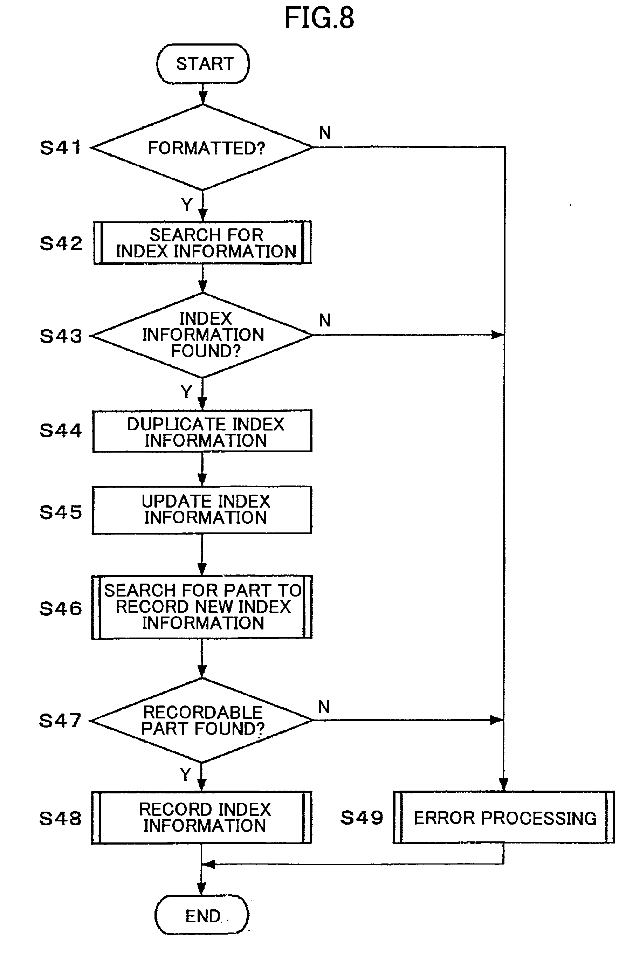

FIG. 8 is a flowchart showing the operation of moving index information in the controller of the optical disk drive or the CPU of the host computer.

In step (indicated by "S" in the drawing) 41, the controller (or the CPU 29) determines whether the optical disk is formatted. If the optical disk is not formatted, it proceeds to step 49, and performs error processing and ends this operation.

If it is determined in step 41 that the optical disk is formatted, in step 42, it searches for an index information item of an index information group, and in step S43, it determines whether the index information item has been found. If the index information item has not been found, it proceeds to step 49, and performs error processing and ends this operation.

If it is determined in step 43 that the index information item has been found, in step 44, it duplicates the index information, and in step 45, it updates the index information. In step 46, it searches for a part in which the new index information is recordable, and in step 47, it determines whether a part in which the new index information is recordable has been found. If a part in which the new index information is recordable has not been found, it proceeds to step 49, and performs error processing and ends this operation.

If it is determined in step 47 that a part in which the new index information is recordable has been found, in step S48, it records the index information item of the index information group in the recordable part, and ends this operation.

That is, according to this operation, first, it is checked whether the optical disk has been subjected to recording. Then, a search is actually conducted for an index information item of an index information group so as to confirm its presence. If the index information item is found, it is duplicated and if any, it is updated by a user or time. Then, a search for a part in which the new index information item is recordable is conducted, and if possible, the new index information item is recorded in the recordable part. If the index information item itself or a part in which the new index information item is recordable cannot be found, this is processed as error.

The function of thus moving backward in the optical disk is possible in the case of overwriting the index area or in the case where more recording area is required after index information is initially recorded with a fixed size in the front part of the optical disk, of which cases a description is given based on FIG. 4.

Thus, according to this embodiment, it is possible to record index information definable by a user apart from conventional index information at the time of recording content data. Originally, the user has significant freedom in defining the type, time interval, and number of items of index information. This index information can be made by storing images and sound in conjunction with a timer.

Further, in order to make it possible to record unprescribed index information according to the idea of a user, an area to record index information apart from content data is defined, and the index data are stored therein.

Further, the index information is provided after the content data so as to allow sequential access to the content data and the index information and to prevent a decrease in search performance due to dispersive access.

Further, gathering the content data in the front area or the rear area of the optical disk makes it possible to minimize the effect of additionally writing content data. In this case, by disposing the index data in the Lead-Out area, which is different from the user recordable area to store the content data, it is possible to prevent inadvertent overwriting or additional writing at the time of editing the content data. Further, although disposed as the Lead-Out area, the location has its attribute recorded as the same attribute as that of the user recordable area to store user data, thereby giving consideration to readability in the existing DVD playback units.

### INDUSTRIAL APPLICABILITY

An information recorder, an information recording method, and a program according to the present invention are also applicable to video recorders, video camcorders, digital editing apparatuses, non-linear editing apparatuses, digital cameras, game consoles, and DVD players.

## Claims

1. An information recorder, **characterized by**:
recording means for recording data accompanying user data in an area disposed outside a user data area to record the user data of a recording area of an information recording medium.

2. The information recorder as claimed in claim 1, **characterized in that** said recording means includes means for recording a same attribute as an attribute of the user data area as an attribute of the area disposed outside the user data area.

3. An information recorder, **characterized by**:
content data recording means for recording content data in an information recording medium;
index information generating means for generating, for the content data, index information for referring to contents of the content data; and
index information recording means for recording the index information generated by said index information generating means in an area disposed outside a user data area to record user data of a recording area of the information recording medium.

4. The information recorder as claimed in claim 3, **characterized in that** said index information recording means records the index information generated by said index information generating means in the area disposed outside the user data area to record the user data of the recording area of the information recording medium at a time after said content data recording means completes the recording of the content data in the information recording medium.

5. The information recorder as claimed in claim 3, **characterized in that** said index information recording means successively records the index information generated by said index information generating means in the area disposed outside the user data area to record the user data of the recording area of the information recording medium during the recording of the content data in the information recording medium by said content data recording means.

6. An information recording method, **characterized by**:
recording data accompanying user data in an area disposed outside a user data area to record the user data of a recording area of an information recording medium.

7. The information recording method as claimed in claim 6, **characterized by** recording a same attribute as an attribute of the user data area as an attribute of the area disposed outside the user data area.

8. An information recording method, **characterized by**:
a content data recording step of recording content data in an information recording medium;
an index information generating step of generating, for the content data, index information for referring to contents of the content data; and
an index information recording step of recording the index information generated by said index information generating step in an area disposed outside a user data area to record user data of a recording area of the information recording medium.

9. The information recording method as claimed in claim 8, **characterized in that** said index information recording step records the index information generated by said index information generating step in the area disposed outside the user data area to record the user data of the recording area of the information recording medium at a time after said content data recording step completes the recording of the content data in the information recording medium.

10. The information recording method as claimed in claim 8, **characterized in that** said index information recording step successively records the index information generated by said index information generating step in the area disposed outside the user data area to record the user data of the recording area of the information recording medium during the recording of the content data in the information recording medium by said content data recording step.

11. A recording medium in which is recorded a program for causing a computer to execute a process of recording data accompanying user data in an area disposed outside a user data area to record the user data of a recording area of an information recording medium.

12. The recording medium in which is recorded the program as set forth in claim 11 for causing the computer to execute a process of recording a same attribute as an attribute of the user data area as an attribute of the area disposed outside the user data area.

13. A recording medium in which is recorded a program for causing a computer to execute:
a content data recording process of recording content data in an information recording medium;
an index information generating process of generating, for the content data, index information for referring to contents of the content data; and
an index information recording process of recording the index information generated by said index information generating process in an area disposed outside a user data area to record user data of a recording area of the information recording medium.

14. The recording medium in which is recorded the program as set forth in claim 13, wherein said index information recording process records the index information generated by said index information generating process in the area disposed outside the user data area to record the user data of the recording area of the information recording medium at a time after said content data recording process completes the recording of the content data in the information recording medium.

15. The recording medium in which is recorded the program as set forth in claim 13, wherein said index information recording process successively records the index information generated by said index information generating process in the area disposed outside the user data area to record the user data of the recording area of the information recording medium during the recording of the content data in the information recording medium by said content data recording process.
